# EUROPEAN PATENT APPLICATION

(11) **EP 4 531 185 A1**
(43) Date of publication of application: **02.04.2025**
(21) Application number: 22947332.7
(22) Date of filing: 23.06.2022
(51) Int. Cl.: H01M 50/342

(54) **BUTTON CELL, PREPARATION METHOD THEREFOR, AND ELECTRONIC DEVICE**

(71) Applicant: Ningde Amperex Technology Limited, Ningde, Fujian 352100 (CN)
(72) Inventor: YANG, Hongzhan, Ningde, Fujian 352100 (CN); ZENG, Qiao, Ningde, Fujian 352100 (CN); YAN, Dongyang, Ningde, Fujian 352100 (CN)
(74) Representative: Icosa
(86) International application number: PCT/CN2022/100833
(87) International publication number: WO 2023/245561

(57) **Abstract**

Embodiments of this application provide a button cell and a preparation method thereof, and an electronic apparatus. The button cell includes an electrode assembly, a first housing, and a second housing, where the first housing and the second housing are connected and mated to form an accommodating space. The electrode assembly is disposed in the accommodating space. The first housing includes a first bottom wall and a first side wall connected to the first bottom wall. The first bottom wall is provided with a groove. A size of the first bottom wall in a first direction is T µm, and a size of the groove in the first direction is H µm, where 0.1T ≤ H ≤ 0.7T and the first direction is perpendicular to the first bottom wall. When internal pressure of the button cell is too high, gas accumulated inside can burst open the groove in advance to release pressure, thereby discharging the gas inside the battery in a controlled manner, and reducing the risk of subsequent thermal runaway in the button cell. This is beneficial to improving the safety and product performance of the button cell.

## Description

### TECHNICAL FIELD

This application relates to the field of energy storage technologies, and particularly, to a button cell and a preparation method thereof, and an electronic apparatus.

### BACKGROUND

Due to their rechargeable and reusable advantages, secondary batteries such as button cells are widely used in various electronic apparatuses, for example, portable electronic apparatuses. In related art, secondary batteries mostly include a housing and an electrode assembly placed inside the housing.

Secondary batteries are manufactured in a relatively precise process and require high assembly precision for housings, electrode assemblies, and the like. Additionally, in some charge and discharge processes of secondary batteries, if secondary batteries are in a high temperature and high-pressure environment, gas may be generated inside housings. If the gas is not dissipated, product performance of secondary batteries is affected.

### SUMMARY

The purpose of the embodiments of this application is to provide a button cell and an electronic apparatus to improve the safety and product performance of the button cell. Specific technical solutions are as follows:

An embodiment of a first aspect of this application provides a button cell including an electrode assembly, a first housing, and a second housing, where the first housing and the second housing are connected and mated to form an accommodating space, and the electrode assembly is disposed in the accommodating space; the first housing includes a first bottom wall and a first side wall connected to the first bottom wall, where the first bottom wall is provided with a groove; and a size of the first bottom wall in a first direction is T µm, and a size of the groove in the first direction is H µm, where 0.1T ≤ H ≤ 0.7T; and the first direction is a direction perpendicular to the first bottom wall.

The beneficial effects of the embodiments of this application: The size of the groove is adjusted to meet the above relation so that when internal pressure of the button cell is too high (for example, leading to significant gas generation of the battery in extreme abuse conditions), gas accumulated inside can burst open the groove in advance to release pressure, thereby discharging the gas inside the battery in a controlled manner and improving the safety and product performance of the button cell. In addition, the groove of the first bottom wall meeting the above relation is beneficial for identifying and positioning the housing, thus facilitating the assembly and fitting of the first housing and the second housing, improving the assembly precision of the electrode assembly, and enhancing the product performance.

In some embodiments, 0.3T ≤ H ≤ 0.6T, which is beneficial for obtaining higher performance.

In some embodiments, the groove extends along a direction from an edge of the first bottom wall toward a center of the first bottom wall. Thus, an excessively high internal pressure of the button cell is conducive to forming a pressure relief port at the groove and along the extension line from the edge to the center of the first bottom wall where the groove is located, facilitating rapid discharge of the gas inside the battery, and improving the safety and product performance of the button cell.

In some embodiments, the groove extends from an edge of the first bottom wall toward a center of the first bottom wall. Thus, when the internal pressure of the button cell is too high, being the connection point between the first bottom wall and the first side wall, the edge of the first bottom wall is weaker in strength. The gas accumulated inside can burst open the at-bottom-wall edge of the groove in advance to release pressure, thereby discharging the gas inside the battery in a controlled manner and helping to improve the safety and product performance of the button cell.

In some embodiments, the groove is separated from a center of the first bottom wall, thereby reducing the risk of poor welding or welding through in externally welding a conductive plate or internally welding the electrode assembly to the first housing. This is more conducive to improving the safety and product performance of the button cell. It also facilitates precise positioning of the first bottom wall through the groove, improving assembly precision.

In some embodiments, the groove extends from the first bottom wall to the first side wall. In this way, the groove passes through the edge of the first bottom wall, and the groove region is larger. This is more conducive to pressure relief in the case of large gas production caused by button cell abuse and improving the pressure relief reliability of the groove, thereby further enhancing the safety of the button cell. This also facilitates assembly positioning through the first side wall.

In some embodiments, the button cell of this application further includes an electrolyte, where the second housing is provided with an electrolyte injection structure, and the first bottom wall is not provided with the electrolyte injection structure. First, this facilitates the injection of the electrolyte into the button cell, and second, this reduces the impact on the strength of the first bottom wall when both the electrolyte injection structure and the groove are located on the first bottom wall, thereby improving the safety of the button cell.

In some embodiments, in the first direction, two surfaces of the first bottom wall are both provided with the groove, and orthographic projections in the first direction of the grooves on the two surfaces of the first bottom wall at least partially overlap, where 0.1T ≤ H ≤ 0.3T. This arrangement improves the pressure relief reliability of the groove and reduces the impact of the groove on the strength of the first bottom wall. Additionally, since the grooves can be easily identified on the first bottom wall, the grooves on two surfaces of the first bottom wall can be used as markers for both inner and outer surfaces of the first bottom wall, thereby improving assembly precision. For instance, when a conductive plate is welded, the marker can be used to position the conductive plate, improving the welding precision of the conductive plate.

In some embodiments, in the first direction, a size of the groove on one surface of the first bottom wall is H₁µm, and a size of the groove on the other surface of the first bottom wall is H₂ µm, where 0.4T ≤ H₁+ H₂ ≤ 1.2T. The grooves on two surfaces of the first bottom wall can improve the pressure relief reliability of the groove, reduce the risk of thermal runaway in the button cell, and since the grooves can be easily identified on the first bottom wall, the grooves on two surfaces of the first bottom wall can also be used as markers for inner and outer surfaces of the first bottom wall respectively. Thus, when a conductive plate is welded, the marker can be used to position the conductive plate. This is more conducive to improving the welding precision of the conductive plate.

In some embodiments, the first bottom wall is circular, and in the first direction, at least one surface of the first bottom wall is provided with the groove. When internal pressure of the button cell is too high, gas accumulated inside can burst open the groove in advance to release pressure, thereby discharging the gas inside the battery in a controlled manner, and reducing the risk of subsequent thermal runaway in the button cell. This is more beneficial to improving the safety and product performance of the button cell.

In some embodiments, an orthographic projection of the groove on the first bottom wall is stripe-shaped; a size of the groove in an extension direction thereof is L mm; a size of the groove in a direction perpendicular to the extension direction of the groove is W mm; and a radius of the first bottom wall is R mm, where 4T ≤ L ≤ 2R and 0.5T ≤ W ≤ 0.1πR. This can allow the first housing to have sufficient structural strength during normal use of the button cell and can allow the gas accumulated inside to burst open the groove in advance to release pressure when the internal pressure of the button cell is too high, thereby discharging the gas inside the battery in a controlled manner, and reducing the risk of subsequent thermal runaway in the button cell. First, this is beneficial to improving the reliability of the button cell, and second, this is beneficial to improving the safety of the button cell.

In some embodiments, 4T ≤ L ≤ R. This can allow the first housing to have sufficient structural strength during normal use of the button cell and can allow the gas accumulated inside to burst open the groove in advance to release pressure when the internal pressure of the button cell is too high, thereby discharging the gas inside the battery in a controlled manner, and reducing the risk of subsequent thermal runaway in the button cell. First, this is beneficial to improving the reliability of the button cell, and second, this is beneficial to improving the safety of the button cell.

In some embodiments, a surface of the first bottom wall is provided with three grooves, an orthographic projection of the groove on the first bottom wall is stripe-shaped, and the grooves extend along a diameter direction of the first bottom wall and an included angle between center lines of adjacent grooves in extension directions thereof is α, where 115° ≤ α ≤ 125°. This arrangement helps to strike a balance between the safety of forming a large pressure relief port for rapid pressure relief in the button cell and the impact of the groove on the strength of the first bottom wall. Additionally, the three grooves can be easily identified on the first bottom wall. Therefore, the three grooves can also be used as markers to help identify and position the housing, thus facilitating the assembly and fitting of the first housing and the second housing, and improving the assembly precision of the electrode assembly. Furthermore, when a conductive plate is welded, this helps a welding machine to position the plate by using the marker, and improves the welding precision of the conductive plate.

In some embodiments, the radius of the first bottom wall is R mm, where 3 ≤ R ≤ 10. This can offer a button cell with good product performance.

In some embodiments, one surface of the first bottom wall is provided with two grooves. The two grooves are disposed intersecting with each other, allowing for a larger groove region. In addition, a pressure relief weak point can be further created at the intersection point, which is more conducive to pressure relief in the case of large gas production caused by abuse of the button cell and enhancing the safety of the button cell. Additionally, the intersection point can further improve positioning accuracy.

In some embodiments, the electrode assembly includes a first conductive plate, and the first conductive plate is connected to the first bottom wall and a connection portion is formed on the first bottom wall. Viewed from the first direction, the connection portion is separated from the groove. That is, the connection portion does not overlap with the groove, thus reducing the risk of poor welding or welding through caused by the overlap of the connection portion and the groove. This is more conducive to improving the safety and product performance of the button cell.

In some embodiments, the electrode assembly further includes a second conductive plate. The second conductive plate is connected to the second housing. Viewed from the first direction, the groove overlaps with the first conductive plate and/or the second conductive plate. First, this helps to improve the assembly precision of the electrode assembly and the welding position accuracy of the conductive plate during manufacturing. Second, this allows the electrode assembly to be placed in a fixed orientation in the accommodating space, reducing the risk of decreased electrolyte injection efficiency caused by the conductive plate completely or partially blocking the electrolyte injection structure. This is conducive to improving the electrolyte injection efficiency of the electrolyte and the wetting effect on the electrode assembly and thus enhancing the yield rate and product performance of the electrochemical apparatus.

In some embodiments, 30 ≤ T ≤ 300, which is conducive to providing the button cell with good structural strength and energy density.

In some embodiments, a shape of an orthographic projection of the groove on the first bottom wall includes at least one of round shape, square shape, or stripe shape.

In some embodiments, the first housing and the second housing are integrally formed. This is conducive to improving manufacturing efficiency.

An embodiment of a second aspect of this application provides a method of preparing a button cell including:
preparing an electrode assembly;
preparing a first housing, where the first housing includes a first bottom wall and a first side wall connected to the first bottom wall, the first bottom wall is provided with a groove, a size of the first bottom wall in a first direction is T µm, and a size of the groove in the first direction is H µm, where 0.1T ≤ H ≤ 0.7T and the first direction is perpendicular to the first bottom wall;
preparing a second housing; and
assembling the electrode assembly with the first housing and assembling the first housing with the second housing to form an accommodating space, where the electrode assembly is disposed in the accommodating space.

An embodiment of a third aspect of this application provides an electronic apparatus, where the electronic apparatus includes the button cell of any one of the embodiments of the first aspect.

In this embodiment of this application, the button cell is configured to provide electrical power to the electronic apparatus. The first bottom wall of the button cell of this embodiment of this application is provided with the groove. The size of the first bottom wall in the first direction is T µm, and the size of the groove in the first direction is H µm, where 0.1T ≤ H ≤ 0.7T. When internal pressure of the button cell is too high, gas accumulated inside can burst open the groove in advance to release pressure, thereby discharging the gas inside the battery in a controlled manner, and reducing the risk of subsequent thermal runaway in the button cell. This is beneficial to improving the safety and product performance of the button cell. Certainly, implementing any embodiment of this application does not necessarily require all the advantages described above.

### BRIEF DESCRIPTION OF DRAWINGS

To describe the technical solutions in the embodiments of this application and in the prior art more clearly, the following briefly describes the accompanying drawings for describing the embodiments and the prior art. Apparently, the accompanying drawings in the following description show merely some embodiments of this application, and persons of ordinary skill in the art may still derive other embodiments from these accompanying drawings without creative efforts.
FIG. 1 is a longitudinal schematic cross-sectional view of a button cell in some embodiments of this application;
FIG. 2 is a top view of a first housing in some embodiments of this application;
FIG. 3 is a longitudinal cross-sectional view along a dashed line F-F in FIG. 2;
FIG. 4 is a top view of a first housing in some other embodiments of this application;
FIG. 5 is a longitudinal cross-sectional view along a dashed line F-F in FIG. 4;
FIG. 6 is a top view of a first housing in some other embodiments of this application;
FIG. 7 is a longitudinal cross-sectional view along a dashed line F-F in FIG. 6;
FIG. 8 is a longitudinal schematic cross-sectional view of a button cell in some embodiments of this application;
FIG. 9 is a top view of a second housing in some embodiments of this application;
FIG. 10 is a top view of a first housing in some other embodiments of this application;
FIG. 11 is a longitudinal cross-sectional view along a dashed line F-F in FIG. 10;
FIG. 12 is a top view of a first housing in some other embodiments of this application;
FIG. 13 is a longitudinal cross-sectional view along a dashed line F-F in FIG. 12;
FIG. 14 is a top view of a first housing in some other embodiments of this application;
FIG. 15 is a longitudinal cross-sectional view along a dashed line F-F in FIG. 14;
FIG. 16 is a top view of a first housing in some other embodiments of this application;
FIG. 17 is a longitudinal cross-sectional view along a dashed line F-F in FIG. 16;
FIG. 18 is a top view of a first housing in some other embodiments of this application;
FIG. 19 is a top view of a first housing in some other embodiments of this application;
FIG. 20 is a bottom view of a button cell in some embodiments of this application;
FIG. 21 is a bottom view of a button cell in some other embodiments of this application;
FIG. 22 is a bottom view of a button cell in some other embodiments of this application;
FIG. 23 is a top view of a first housing in some other embodiments of this application;
FIG. 24 is a top view of a first housing in some other embodiments of this application; and
FIG. 25 is a top view of the first housing in further embodiments of this application.

### Reference signs:

electrode assembly - 1, first housing - 2, second housing - 3, first electrode plate - 4, separator - 5, second electrode plate - 6, center - O, first conductive plate - 7, second conductive plate - 8, accommodating space - 20, first bottom wall - 21, first surface - 21a, second surface - 21b, first side wall - 22, edge - 23, electrolyte injection structure - 31, first active material layer - 41, first current collector - 42, second active material layer - 61, second current collector - 62, connection portion - 71, groove - 211, first groove - 211a, second groove - 211c, third groove - 211e, fourth groove - 211b, fifth groove - 211d, sixth groove - 211f, seventh groove - 211-1, eighth groove - 211-2, ninth groove - 211-3, third surface - 22a, and fourth surface - 22b.

### DETAILED DESCRIPTION

To make the objectives, technical solutions, and advantages of this application more comprehensible, the following describes this application in detail with reference to accompanying drawings and embodiments. Apparently, the described embodiments are merely some but not all of the embodiments of this application. All other embodiments obtained by persons of ordinary skill in the art based on the embodiments of this application shall fall within the protection scope of this application.

The following clearly and detailedly describes the technical solutions in the embodiments of this application. Apparently, the described embodiments are only some rather than all of the embodiments of this application. Unless otherwise defined, all technical and scientific terms used herein shall have the same meanings as commonly understood by those skilled in the art to which this application pertains. The terms used in the specification of this application are merely intended to describe specific embodiments but not intended to constitute any limitation on this application.

The following describes the embodiments of this application in detail. However, this application may be embodied in many different implementations and should not be construed as being limited to the example embodiments set forth herein. Rather, these example embodiments are provided so that this application can be conveyed to those skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more of the associated listed items. In addition, it should be understood that when an element A is referred to as being "connected to" an element B, the element A can be directly connected the element B or an intervening element C may be present therebetween such that the element A and the element B are indirectly connected to each other.

Further, the use of "may" when describing embodiments of this application relates to "one or more embodiments of this application."

The terminology used herein is merely intended to describe specific embodiments but not intended to constitute any limitation on this application. As used herein, the singular forms are intended to include the plural forms as well, unless the context clearly indicates otherwise. It should be further understood that the terms "include" or "comprise" and variations thereof, when used in this specification, specify the presence of stated features, numbers, steps, operations, elements, and/or components but do not preclude the presence or addition of one or more other features, numbers, steps, operations, elements, components, and/or groups thereof.

Spatial related terms such as "above" may be used herein for ease of description to describe the relationship between one element or feature and another element (a plurality of elements) or feature (a plurality of features) as illustrated in the figure. It should be understood that spatial related terms are intended to encompass different orientations of a device or an apparatus in use or operation in addition to the orientations depicted in the figures. For example, if the device in the figures is turned over, elements described as "above" or "over" other elements or features would then be oriented "below" or "beneath" the other elements or features. Thus, the example term "above" can encompass both an orientation of above and below. It should be understood that although the terms first, second, third, or the like may be used herein to describe various elements, components, zones, layers, and/or portions, these elements, components, zones, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

Some embodiments of this application are described in detail below. In absence of conflicts, the following embodiments and features in the embodiments may be combined.

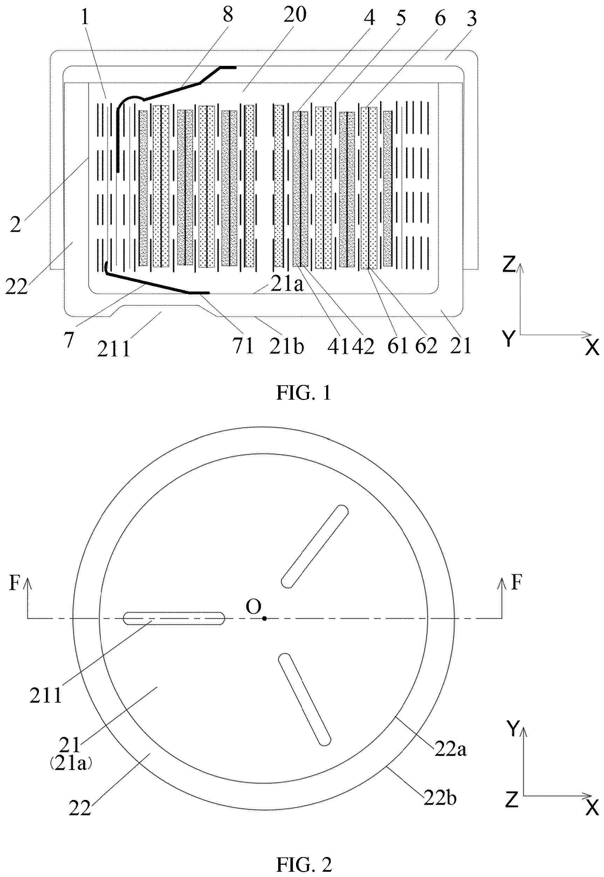

To improve the safety and product performance of button cells, some embodiments of this application provide a button cell and an electronic apparatus. The button cell is configured to provide electrical power to the electronic apparatus. An embodiment of a first aspect of this application provides a button cell including, as shown in FIG. 1, an electrode assembly 1, a first housing 2, and a second housing 3. Where the first housing 2 is hollow, the first housing 2 and the second housing 3 are connected and mated to form an accommodating space 20, and the electrode assembly 1 is placed in the accommodating space 20. In an embodiment, referring to FIG. 1, along a first direction Z, the second housing 3 is fitted to the top of the first housing 2. Thus, the first housing 2 and the second housing 3 are connected to form the accommodating space 20. The first housing 2 includes a first bottom wall 21 and a first side wall 22 connected to the first bottom wall 21. The first side wall 22 extends from an edge of the first bottom wall 21. The first bottom wall 21 is provided with a groove 211. A size of the first bottom wall 21 in the first direction is T µm, and a size of the groove 211 in the first direction is H µm, where 0.1T ≤ H ≤ 0.7T. The first bottom wall has a first surface 21a and a second surface 21b. The first surface 21a can be an inner surface of the first bottom wall 21, and the second surface 21b can be an outer surface of the first bottom wall 21. The groove 211 can be provided on the first surface 21a, the second surface 21b, or both the first surface 21a and the second surface 21b.

In this embodiment of this application, a direction perpendicular to the first bottom wall 21 is defined as the first direction Z, and two directions perpendicular to the first direction Z are defined as a second direction X and a third direction Y, where the second direction X and the third direction Y are perpendicular to each other. The size of the first bottom wall 21 in the first direction Z refers to a distance between the inner surface and the outer surface of the first bottom wall 21 along the first direction Z. An image of the first bottom wall 21 observed from the third direction Y can be obtained to measure the corresponding size in the image. The size of the groove 211 in the first direction Z refers to a distance between a lowest point of the groove 211 and the inner surface of the first bottom wall 21 along the first direction Z, and can be measured using a laser rangefinder. In this application, the inner surface of the first bottom wall 21, namely, the first surface 21a, is a surface of the first bottom wall 21 adjacent to the electrode assembly 1; and the outer surface of the first bottom wall 21, namely, the second surface 21b is a surface of the first bottom wall 21 away from the electrode assembly 1. With such arrangement, when internal pressure of the button cell is too high (for example, leading to significant gas generation of the battery in extreme abuse conditions), gas accumulated inside can burst open the groove in advance to release pressure, thereby discharging the gas inside the battery in a controlled manner, and reducing the risk of subsequent thermal runaway in the button cell. This is beneficial to improving the safety and product performance of the button cell. In addition, the groove of the first bottom wall is beneficial for identifying and positioning the housing, thus facilitating the assembly and mating of the first housing and the second housing, and improving the assembly precision of the electrode assembly. This application does not particularly restrict the forming manner of the groove. For example, it can be formed by applying pressure to the first housing 2 by using an external pressure device, such as punching through a punching machine.

This application does not particularly restrict the material of the first housing 2, as long as the objectives of this application can be achieved. In an embodiment, the first housing 2 is a positive electrode housing, and the material of the first housing 2 can be steel, aluminum, or aluminum alloy. The steel housing includes elements Fe and C. The steel housing may alternatively include one or more of element Ni, Co, Al, Mn, Cr, Cu, Mg, Mo, S, Si, Ti, V, Pb, Sb, N, or P. The aluminum alloy housing includes element Al. The aluminum alloy housing may alternatively include one or more of element Mn, Cr, Ni, Co, Cu, Fe, Mg, Si, Ti, V, or Zn.

This application does not particularly restrict the material of the second housing 3, as long as the objectives of this application can be achieved. In an embodiment, the second housing 3 is a negative electrode housing, and the material of the second housing 3 can be steel.

In some embodiments, the first housing 2 can be cylindrical, the first bottom wall 21 can be circular, and an orthographic projection of the first side wall 22 on the first bottom wall 21 can be annular Certainly, the first bottom wall 21 can alternatively be rectangular, oval, or the like, the objectives of this application can be achieved.

The electrode assembly 1 of this embodiment of this application, referring to FIG. 1, includes a first electrode plate 4, a separator 5, and a second electrode plate 6. The separator 5 is provided between the first electrode plate 4 and the second electrode plate 6, mainly to prevent short circuits between the positive and negative electrodes and allow ions to pass through. The first electrode plate 4 includes a first active material layer 41 and a first current collector 42, and the second electrode plate 6 includes a second active material layer 61 and a second current collector 62. The first electrode plate 4 can be a positive electrode plate or a negative electrode plate. When the first electrode plate 4 is a positive electrode plate, the first active material layer 41 can be a positive electrode active material layer, and the first current collector 42 can be a positive electrode current collector. When the first electrode plate 4 is a negative electrode plate, the first active material layer 41 can be a negative electrode active material layer, and the first current collector 42 can be a negative electrode current collector. The second electrode plate 6 can be a negative electrode plate or a positive electrode plate. When the second electrode plate 6 is a negative electrode plate, the second active material layer 61 is a negative electrode active material layer, and the second current collector 62 is a negative electrode current collector. When the second electrode plate 6 is a positive electrode plate, the second active material layer 61 is a positive electrode active material layer, and the second current collector 62 is a positive electrode current collector.

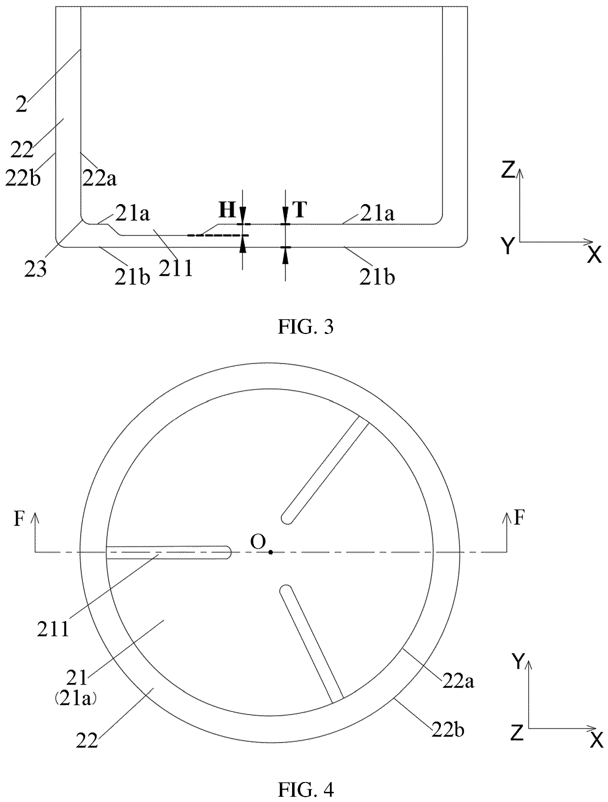

In an embodiment, referring to FIGs. 2 and 3, FIG. 3 is a cross-sectional view along a dashed line F-F (direction Z) in FIG. 2. The groove 211 extends along a direction from an edge 23 of the first bottom wall 21 toward a center of the first bottom wall 21. Thus, an excessively high internal pressure of the button cell is conducive to forming a pressure relief port at the groove 211 and along the extension line from the edge 23 to the center O of the first bottom wall 21 where the groove 211 is located. This is beneficial to rapid discharge of the gas inside the button cell, and improving the safety and product performance of the button cell. It should be understood that the first side wall 22 also has two surfaces: the inner surface and the outer surface. In this embodiment of this application, the inner surface of the first side wall 22 is defined as a third surface 22a, and the outer surface of the first side wall 22 is defined as a fourth surface 22b. In this embodiment of this application, the edge 23 can refer to a junction of the first surface 21a of the first bottom wall 21 and the third surface 22a of the first side wall 22. The edge 23 can also refer to a junction of the second surface 21b of the first bottom wall 21 and the fourth surface 22b of the first side wall 22. It can also be seen from FIG. 2 that viewed from the first direction, the groove 211 is away from the first side wall 22, that is, not in contact with the first side wall 22.

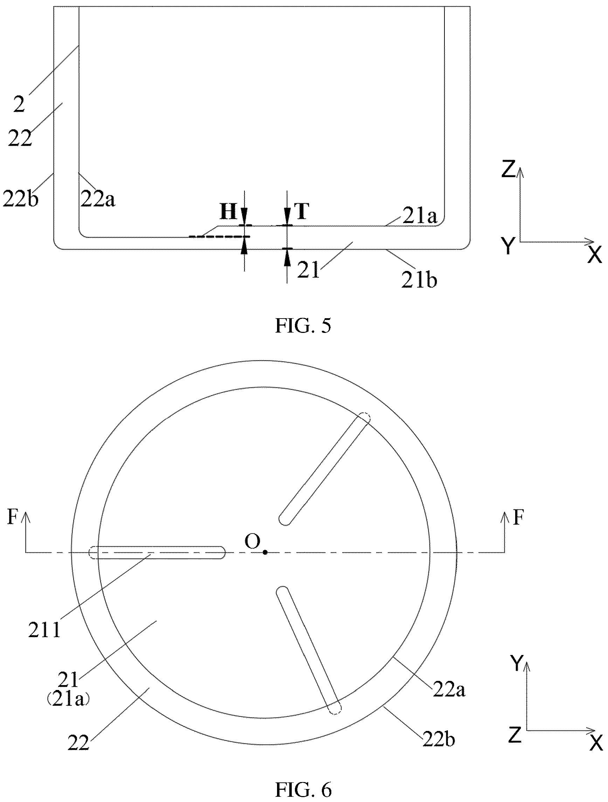

In an embodiment, as shown in FIGs. 4 and 5, FIG. 5 is a cross-sectional view along a dashed line F-F in FIG. 4. The groove 211 extends from the edge 23 of the first bottom wall 21 toward the center of the first bottom wall 21. In this way, when internal pressure of the button cell is too high, being the connection point between the first bottom wall 21 and the first side wall 22, the edge 23 of the first bottom wall 21 is weaker in strength. Gas accumulated inside can burst open the groove in advance to release pressure, thereby discharging the gas inside the battery in a controlled manner, and reducing the risk of subsequent thermal runaway in the button cell. This is beneficial to improving the safety and product performance of the button cell.

In this embodiment of this application, the center O of the first bottom wall 21 can be determined in the following manner: Obtaining a bottom view of the button cell 1 to get an image of the first bottom wall 21; and obtaining a circumscribed circle of the first bottom wall 21 to determine the center of the circumscribed circle as the center O of the first bottom wall.

In an embodiment, as shown in FIGs. 2 and 4, the groove 211 is separated from the center O of the first bottom wall 21, thereby reducing the risk of poor welding or welding through in externally welding a conductive plate or internally welding the electrode assembly 1 to the first housing 2. This is more conducive to improving the safety and product performance of the button cell. It also facilitates precise positioning of the first bottom wall 21 through the groove 211, improving assembly precision.

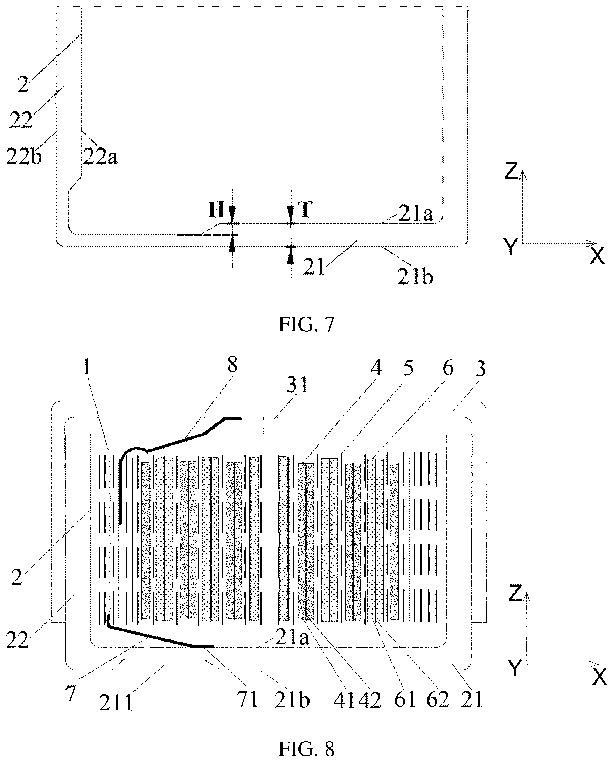

In an embodiment, as shown in FIGs. 6 and 7, FIG. 7 is a cross-sectional view along a dashed line F-F in FIG. 6. The groove 211 extends from the first bottom wall 21 to the first side wall 22. Thus, the groove 211 passes through the edge 23 of the first bottom wall 21, and the groove region is larger. This is more conducive to pressure relief in the case of large gas production caused by button cell abuse and improving the pressure relief reliability of the groove 211, thereby further enhancing the safety of the button cell. This also facilitates assembly positioning through the first side wall 22.

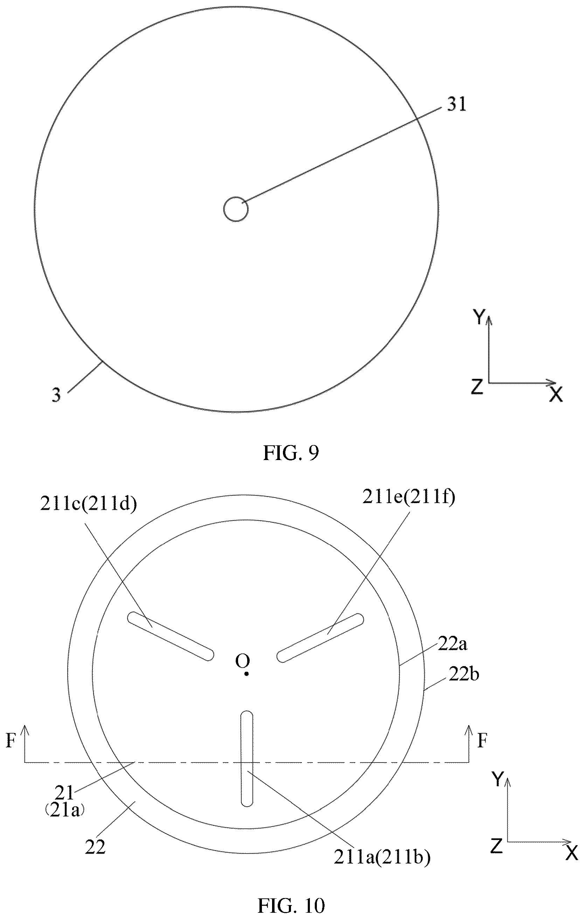

In an embodiment, the button cell of this embodiment of this application further includes an electrolyte. As shown in FIGs. 8 and 9, the second housing 3 is provided with an electrolyte injection structure 31. First, this facilitates the injection of the electrolyte into the button cell. Second, the design strength at the location of the electrolyte injection structure 31 is generally low. When the internal pressure of the button cell is too high, as the internal pressure of the button cell increases, the second housing 3 of the button cell can be burst open in advance at or near the location of the electrolyte injection structure 31, thereby releasing the gas inside the button cell in a controlled manner. This is more conducive to improving the safety of the button cell. Since the electrolyte injection structure 31 will be sealed by secondary welding after the injection, in this embodiment of this application, the first bottom wall 21 is not provided with the electrolyte injection structure 31. This reduces the risk of damage to the groove 211 and the impact on the strength of the first bottom wall 21 that are caused by the electrolyte injection structure 31 and the groove 211 being located in the same region, and is more conducive to improving the safety of the button cell. The electrolyte injection structure 31 in this embodiment of this application can be an electrolyte injection hole. After the electrolyte is injected, the electrolyte injection structure 31 can be sealed to seal the button cell. This embodiment of this application does not limit the manner of sealing, and a sealing manner in the art such as laser welding can be used.

In an embodiment, in the first direction, two surfaces of the first bottom wall 21 are both provided with the groove 211. Orthographic projections of the grooves 211 on two surfaces of the first bottom wall 21 in the first direction at least partially overlap where 0.1T ≤ H ≤ 0.3T. In this embodiment of this application, the two surfaces of the first bottom wall 21 can refer to the first surface 21a and the second surface 21b of the first bottom wall 21 observed along the first direction. The first surface 21a refers to a surface of the first bottom wall 21 facing towards the electrode assembly 1, and the second surface 21b refers to a surface of the first bottom wall 21 facing away from the electrode assembly 1.

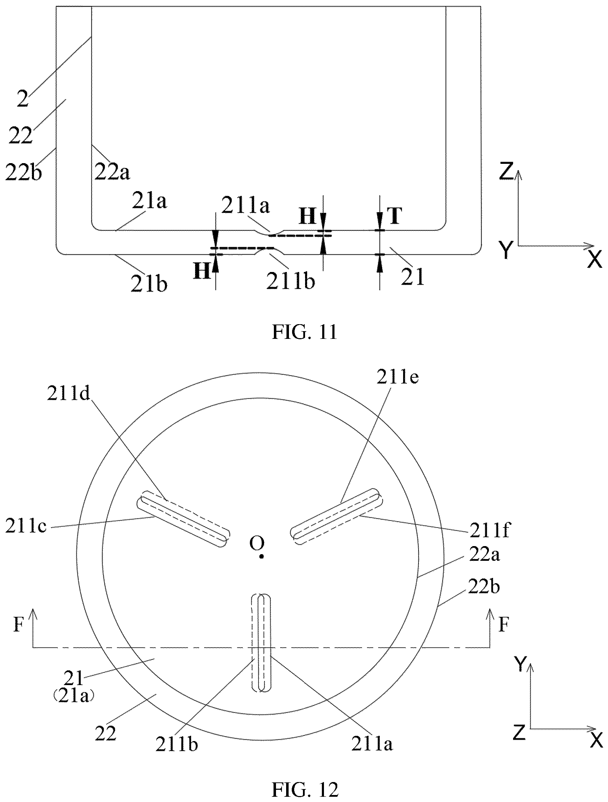

In a specific embodiment, as shown in FIGs. 10 and 11, the first surface 21a of the first bottom wall 21 is provided with a first groove 211a, a second groove 211c, and a third groove 211e. The second surface 21b of the first bottom wall 21 is provided with a fourth groove 211b, a fifth groove 211d, and a sixth groove 211f. Orthographic projections of the first groove 211a and the fourth groove 211b in the first direction projection overlap. Orthographic projections of the second groove 211c and the fifth groove 211d in the first direction projection overlap. Orthographic projections of the third groove 211e and the sixth groove 211f in the first direction projection overlap. The thickness H of the first groove 211a, the second groove 211c, or the third groove 211e meets 0.1T ≤ H ≤ 0.3T. The thickness H of the fourth groove 211b, the fifth groove 211d, or the sixth groove 211f also meets 0.1T ≤ H ≤ 0.3T.

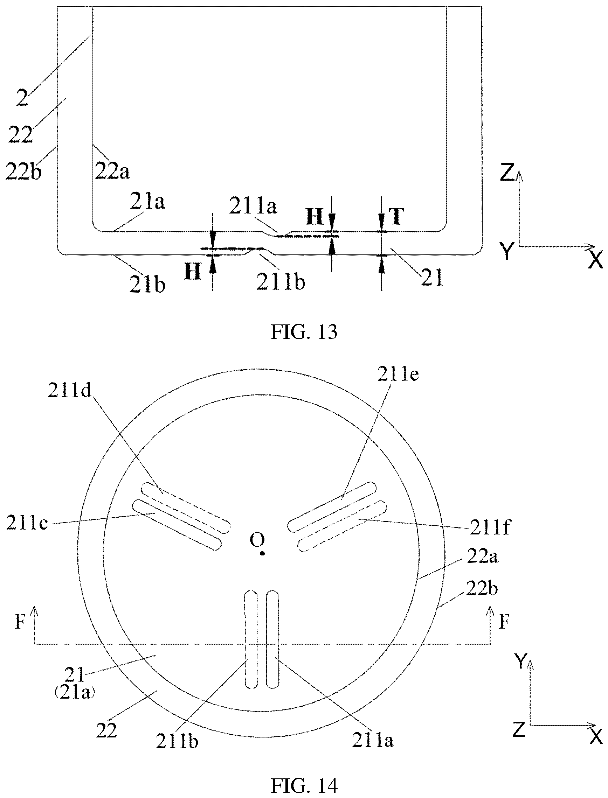

In another specific embodiment, as shown in FIGs. 12 and 13, FIG. 13 is a cross-sectional view along a dashed line F-F in FIG. 12. Referring to FIG. 12, the first surface 21a of the first bottom wall 21 is provided with a first groove 211a, a second groove 211c, and a third groove 211e. The second surface 21b of the first bottom wall 21 is provided with a fourth groove 211b, a fifth groove 211d, and a sixth groove 211f. Orthographic projections of the first groove 211a and the fourth groove 211b in the first direction projection partially overlap. Orthographic projections of the second groove 211c and the fifth groove 211d in the first direction projection partially overlap. Orthographic projections of the third groove 211e and the sixth groove 211f in the first direction projection partially overlap. The thickness H of the first groove 211a, the second groove 211c, or the third groove 211e meets 0.1T ≤ H ≤ 0.3T. The thickness H of the fourth groove 211b, the fifth groove 211d, or the sixth groove 211f also meets 0.1T ≤ H ≤ 0.3T.

This arrangement improves the pressure relief reliability of the groove 211 and reduces the impact of the groove 211 on the strength of the first bottom wall 21. In addition, the grooves 211 on two surfaces of the first bottom wall 21 can reduce the risk of thermal runaway in the button cell. In addition, the first groove 211a, the second groove 211c, and the third groove 211e facilitate quick identification and fixing of a conductive plate when the conductive plate is welded. Using the groove to position the conductive plate is beneficial to improving the welding yield rate of the conductive plate. The fourth groove 211b, the fifth groove 211d, and the sixth groove 211f facilitate identification and grasping by a robot during the manufacturing of the electrode assembly 20, and are beneficial to the assembly and fitting of the first housing 21 and the second housing 22, thereby improving the assembly precision of the electrode assembly.

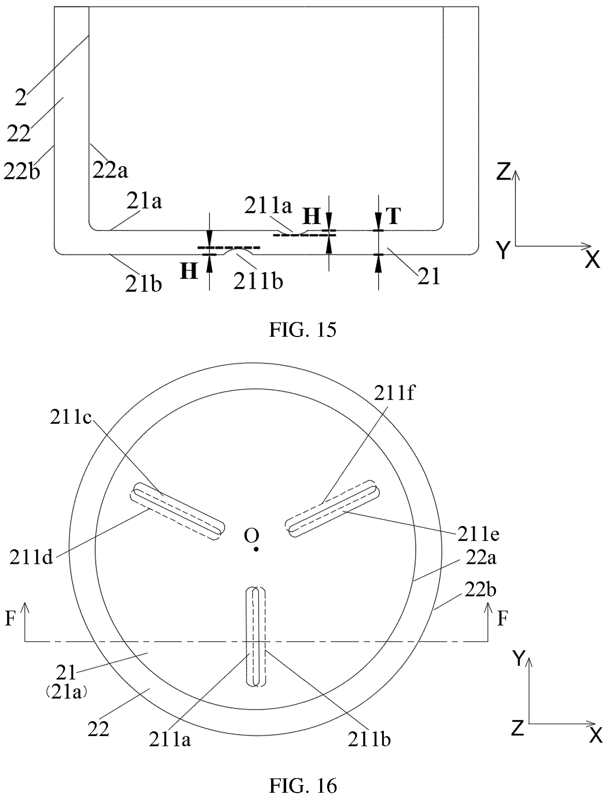

In another specific embodiment, as shown in FIGs. 14 and 15, FIG. 15 is a cross-sectional view along a dashed line F-F in FIG. 14. Referring to FIG. 14, the first surface 21a of the first bottom wall 21 is provided with a first groove 211a, a second groove 211c, and a third groove 211e. The second surface 21b of the first bottom wall 21 is provided with a fourth groove 211b, a fifth groove 211d, and a sixth groove 211f. Orthographic projections of the first groove 211a and the fourth groove 211b in the first direction projection are separated. Orthographic projections of the second groove 211c and the fifth groove 211d in the first direction projection are separated. Orthographic projections of the third groove 211e and the sixth groove 211f in the first direction projection are separated. The thickness H of the first groove 211a, the second groove 211c, or the third groove 211e meets 0.1T ≤ H ≤ 0.3T. The thickness H of the fourth groove 211b, the fifth groove 211d, or the sixth groove 211f also meets 0.1T ≤ H ≤ 0.3T. Such arrangement allows the grooves on two surfaces of the first bottom wall 21 to reduce the risk of thermal runaway in the button cell. In addition, during the assembly and fitting of the first housing 21 and the second housing 22, this facilitates positioning from both the outer and inner sides of the first housing 21, thereby improving the assembly precision of the electrode assembly and reducing the difficulty of the process operation in fitting the first housing 21 and the second housing 22.

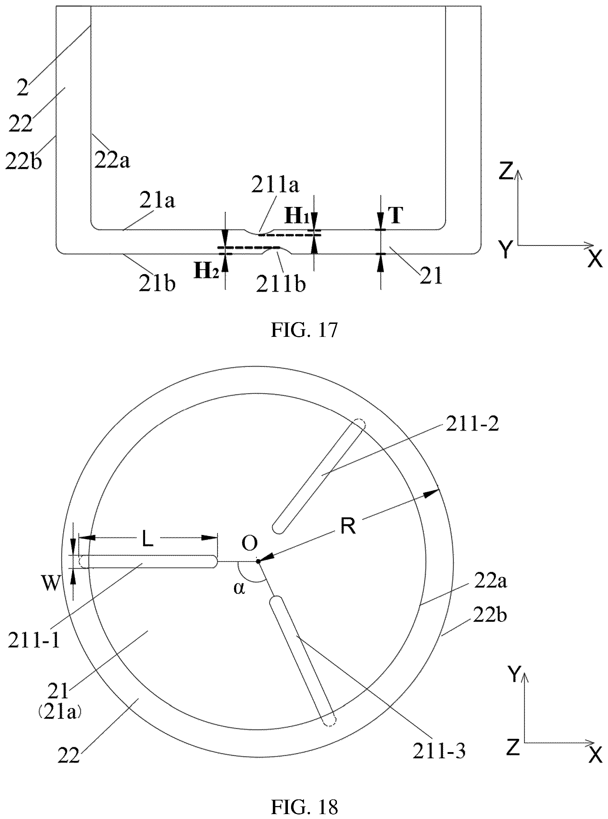

In an embodiment, as shown in FIGs. 16 and 17, FIG. 17 is a cross-sectional view along a dashed line F-F in FIG. 16. In the first direction, a size of the groove 211 on one surface of the first bottom wall 21 is H₁ µm, and a size of the groove 211 on the other surface of the first bottom wall 21 is H₂ µm, where 0.4T ≤ H₁ + H₂ ≤ 1.2T. In a specific embodiment, referring to FIG. 16, the sizes of the first groove 211a, the second groove 211c, and the third groove 211e are all H₁ µm, and the sizes of the fourth groove 211b, the fifth groove 211d, and the sixth groove 211f are all H₂ µm. In such arrangement, the first groove 211a, the second groove 211c, and the third groove 211e facilitate quick identification and fixing of a conductive plate when the conductive plate is welded. Using the groove to position the conductive plate is beneficial to improving the welding yield rate of the conductive plate. The fourth groove 211b, the fifth groove 211d, and the sixth groove 211f facilitate identification and grasping by a robot during the manufacturing of the electrode assembly 20, and are beneficial to the assembly and fitting of the first housing 21 and the second housing 22, thereby improving the assembly precision of the electrode assembly.

In an embodiment, the first bottom wall 21 is circular, and in the first direction, at least one surface of the first bottom wall 21 is provided with the groove 211. In some specific embodiments, as shown in FIG. 2 to FIG. 7, one surface of the first bottom wall 21 is provided with the groove 211. In some other specific embodiments, as shown in FIGs. 10 to 17, the first surface 21a of the first bottom wall 21 is provided with the first groove 211a, the second groove 211c, and the third groove 211e. The second surface 21b of the first bottom wall 21 is provided with the fourth groove 211b, the second groove 211c, and the fifth groove 211d. In this way, when internal pressure of the button cell is too high, gas accumulated inside can burst open the groove in advance to release pressure, thereby discharging the gas inside the battery in a controlled manner, and reducing the risk of subsequent thermal runaway in the button cell. This is beneficial to improving the safety and product performance of the button cell.

In an embodiment, referring to FIG. 18, an orthographic projection of the groove 211 on the first bottom wall 21 is stripe-shaped; a size of the groove 211 in an extension direction thereof is L mm; a size of the groove 211 in a direction perpendicular to the extension direction of the groove is W mm; and a radius of the first bottom wall 21 is R mm, where 4T ≤ L ≤ 2R, preferably 4T ≤ L ≤ R and 0.5T ≤ W ≤ 0.1πR. Adjusting the size of the groove to meet the above relationship can maintain sufficient structural strength of the first housing during normal use of the button cell and can allow the gas accumulated inside to burst open the groove in advance to release pressure when the internal pressure of the button cell is too high, thereby discharging the gas inside the battery in a controlled manner, and reducing the risk of subsequent thermal runaway in the button cell. First, this is beneficial to improving the reliability of the button cell, and second, this is beneficial to improving the safety of the button cell. It can be understood that for any one of the multiple grooves 211, the extension direction of the groove 211 and a direction of the first groove 211 perpendicular to the extension direction thereof are in a same plane. In this embodiment of this application, the size L mm of the groove 211 (that is, the length of the groove) in the extension direction thereof and the size W mm of the groove 211 (that is, the length of the groove 211) in a direction perpendicular to the extension direction of the groove can both be measured in the following manner: using a CCD camera to take an image, and measuring the corresponding size in the image.

In this embodiment of this application, a radius R of the first bottom wall 21 can be determined in the following manner: Obtaining a bottom view of the button cell 1 to get an image of the first bottom wall 21; and obtaining a circumscribed circle of the first bottom wall 21 to determine the radius of the circumscribed circle as the radius R of the first bottom wall 21.

In an embodiment, as shown in FIG. 18, one surface of the first bottom wall 21 is provided with three grooves: a seventh groove 211-1, an eighth groove 211-2, and a ninth groove 211-3. An orthographic projection of any one of the seventh groove 211-1, the eighth groove 211-2, and the ninth groove 211-3 on the first bottom wall 21 is stripe-shaped. The three grooves extend along a diameter direction of the first bottom wall 21, and an included angle between center lines of two adjacent grooves in extension directions thereof is α, where 115° ≤ α ≤ 125°. This arrangement helps to strike a balance between the safety of forming a large pressure relief port for rapid pressure relief in the button cell and the impact of the groove 211 on the strength of the first bottom wall 21. In addition, the three grooves 211 can be easily identified on the first bottom wall 21, so the three grooves 211 can also be used as markers, thus facilitating the assembly and fitting of the first housing 2 and the second housing 3, and improving the assembly precision of the electrode assembly 2. Furthermore, when a conductive plate is welded, this helps a welding machine to position the plate by using the marker and helps to improve the welding yield rate of the conductive plate.

In an embodiment, the radius of the first bottom wall 21 is R mm, where 3 ≤ R ≤ 10. This can offer a button cell with good product performance.

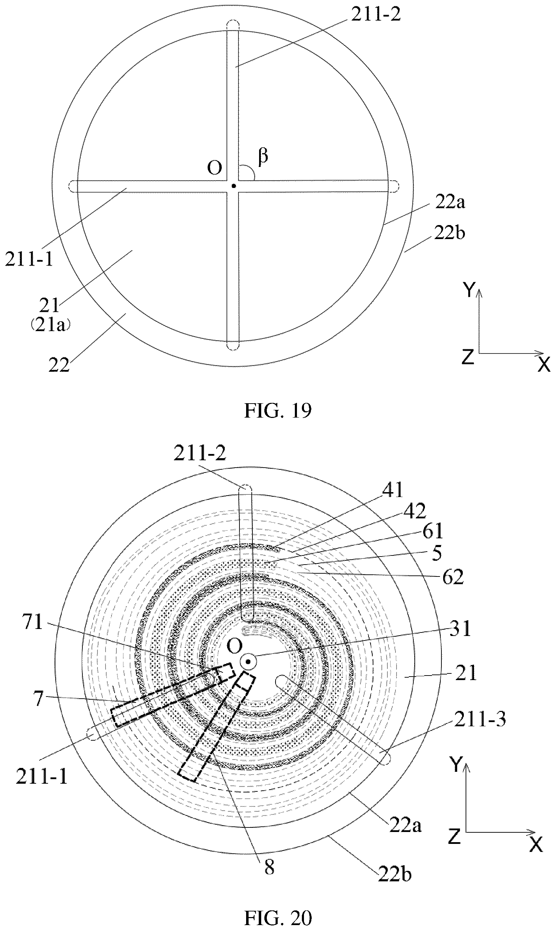

In an embodiment, referring to FIG. 19, one surface of the first bottom wall 21 is provided with two grooves: a seventh groove 211-1 and an eighth groove 211-2. The seventh groove 211-1 and the eighth groove 211-2 are disposed intersecting with each other. The included angle β between the two grooves is 0° < β < 180°. As an example, the included angle between the two grooves 211 in FIG. 19 is 90°. Thus, the groove region is larger, a pressure relief weak point can be further created at the intersection point, which is more conducive to pressure relief in the case of large gas production caused by abuse of the button cell and further enhancing the safety of the button cell. Additionally, the intersection points can further improve positioning accuracy.

In an embodiment, as shown in FIG. 1, the electrode assembly 1 of this embodiment of this application further includes a first conductive plate 7. The first conductive plate 7 is connected to the first bottom wall 21 and a connection portion 71 is formed on the first bottom wall 21. As shown in FIG. 20, viewed from the first direction, the connection portion 71 is separated from the groove 211. The inventors have found that the first conductive plate 7 is usually a strip-shaped thin metal sheet. Typically, only a portion of a conductive plate is electrically connected to the first housing 2, that is, the connection portion 71 is connected to the first bottom wall 21. The connection portion 71 can be fixed on the first bottom wall 21 by welding, and the first conductive plate 7 is in contact with the first housing 2 at the electrical connection position so as to conduct electricity. Since the groove 211 is usually uneven and thinner than other parts of the first bottom wall 21, the connection portion 71 of this embodiment of this application is separated from the groove 211, so as to reduce the risk of poor welding or welding through caused by the connection portion 71 not being separated from the groove 211. This is more conducive to improving the safety and product performance of the button cell.

In an embodiment, as shown in FIG. 1, the electrode assembly 1 of this embodiment of this application further includes a second conductive plate 8. The second conductive plate 8 is connected to the second housing 3. Viewed from the first direction, the groove 211 overlaps with the first conductive plate 7 and/or the second conductive plate 8. First the groove 211 on the first bottom wall 21 can be used to position the first conductive plate 7 and the second conductive plate 8, helping to improve the assembly precision of the electrode assembly 1 and the welding position accuracy of the conductive plates during manufacturing. Second, referring to FIGs. 8 and 9, the top of the second housing 3 is usually provided with an electrolyte injection structure 31 (for example, an electrolyte injection hole), and an orthographic projection of the electrolyte injection structure 31 on the first bottom wall 21 usually does not overlap with the groove 211. In view of this, in this application, the orthographic projections of the first conductive plate 7 and the second conductive plate 8 on the first bottom wall 21 are both partially or completely covered by the orthographic projection of the groove 211 on the bottom wall 21. This can allow the electrode assembly 1 to be assembled in a fixed orientation in the accommodating space 20, thereby reducing the risk of decreased electrolyte injection efficiency caused by the conductive plate completely or partially blocking the electrolyte injection structure 31, and helping to improve the electrolyte injection efficiency of the electrolyte and the yield rate of the electrochemical apparatus.

In a specific embodiment, as shown in FIG. 20, one surface of the first bottom wall 21 is provided with three grooves: a seventh groove 211-1, an eighth groove 211-2, and a ninth groove 211-3. The seventh groove 211-1 overlaps with the first conductive plate 7, and the orthographic projection of the first conductive plate 7 on the first bottom wall 21 is partially or completely covered by an orthographic projection of the seventh groove 211-1 on the first bottom wall 21.

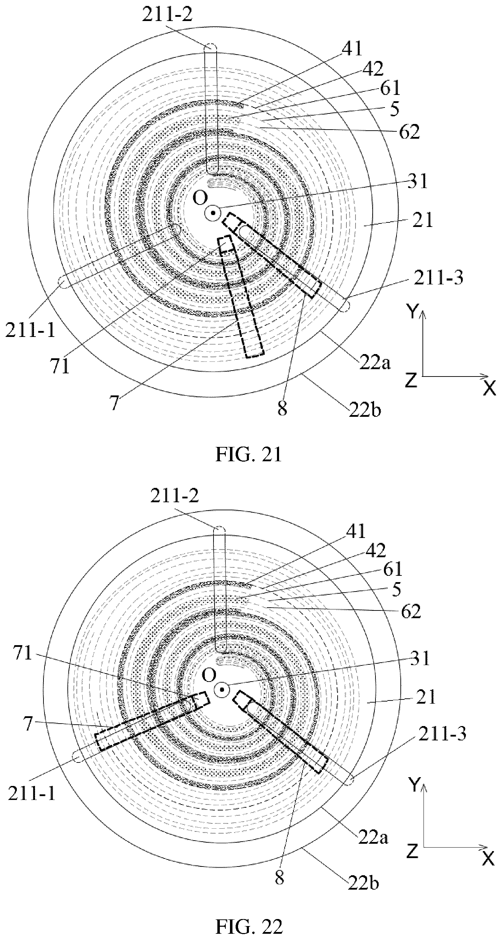

In another specific embodiment, as shown in FIG. 21, one surface of the first bottom wall 21 is provided with three grooves: a seventh groove 211-1, an eighth groove 211-2, and a ninth groove 211-3. The ninth groove 211-3 overlaps with the second conductive plate 8, and the orthographic projection of the second conductive plate 8 on the first bottom wall 21 is partially or completely covered by an orthographic projection of the ninth groove 211-3 on the first bottom wall 21.

In another specific embodiment, as shown in FIG. 22, one surface of the first bottom wall 21 is provided with three grooves: a seventh groove 211-1, an eighth groove 211-2, and a ninth groove 211-3. The seventh groove 211-1 overlaps with the first conductive plate 7, and the ninth groove 211-3 overlaps with the second conductive plate 8. The orthographic projections of the first conductive plate 7 and the second conductive plate 8 on the first bottom wall 21 are partially or completely covered by orthographic projections of the seventh groove 211-1 and the ninth groove 211-3 on the bottom wall 21.

In this embodiment of this application, the first conductive plate 7 and the second conductive plate 8 refer to metal conductors that lead out the positive and negative electrodes from the electrode assembly 1. Contacting the positive and negative electrode on the button cell can allow for charging and discharging of the button cell. The polarities of the first conductive plate 7 and the second conductive plate 8 are opposite. For example, when the first conductive plate 7 is a positive electrode conductive plate, the second conductive plate 8 is a negative electrode conductive plate. When the first conductive plate 7 is a negative electrode conductive plate, the second conductive plate 8 is a positive electrode conductive plate. This embodiment of this application does not particularly restrict the material of the first conductive plate 7 and the second conductive plate 8, as long as it can achieve the purpose of this embodiment of this application. For example, the positive electrode conductive plate is made of at least one of aluminum (Al), aluminum alloy, or nickel (Ni). The negative electrode conductive plate material is made of at least one of nickel (Ni), copper (Cu), copper (Cu) nickel (Ni) alloy, or nickel-plated copper (Ni-Cu).

This embodiment of this application does not particularly restrict the manner of connecting the first conductive plate 7 and the second conductive plate 8 with the first bottom wall 21 and the second housing 3, as long as the purpose of this embodiment of this application can be achieved. For example, the connection manner may include at least one of laser welding, ultrasonic welding, resistance welding, conductive adhesive bonding, or the like, to achieve electrical connection between them. This embodiment of this application does not particularly restrict the directions in which different conductive plates are led out, as long as it can achieve the purpose of this embodiment of this application. For example, the directions in which the first conductive plate 7 and the second conductive plate 8 are led out can be the same or different.

In an embodiment, the size of the first bottom wall 21 in the first direction is T µm, where 30 ≤ T ≤ 300. When T is too small, the first bottom wall 21 is thin, affecting the strength of the button cell. When T is too large, the first bottom wall 21 is thick, affecting the capacity of the button cell and not conducive to pressure relief of the groove. Adjusting T within the above range can allow the button cell to have good structural strength and capacity.

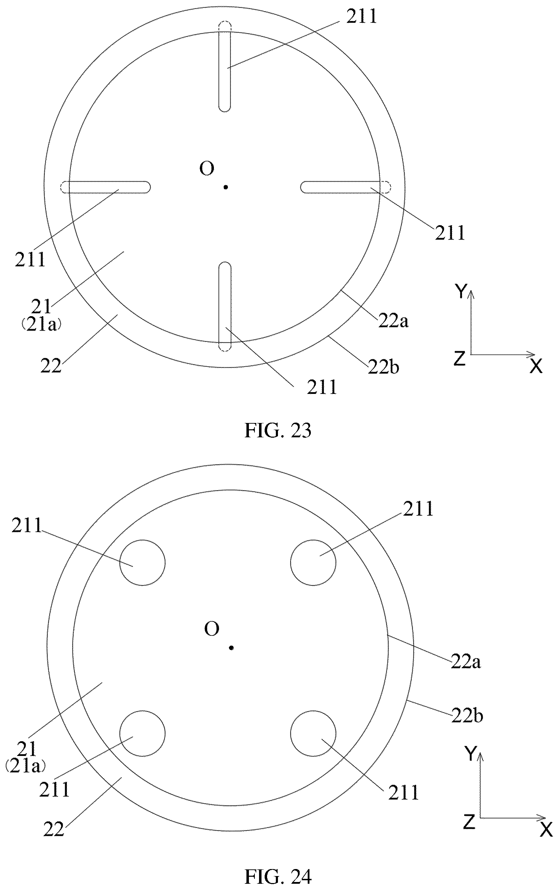

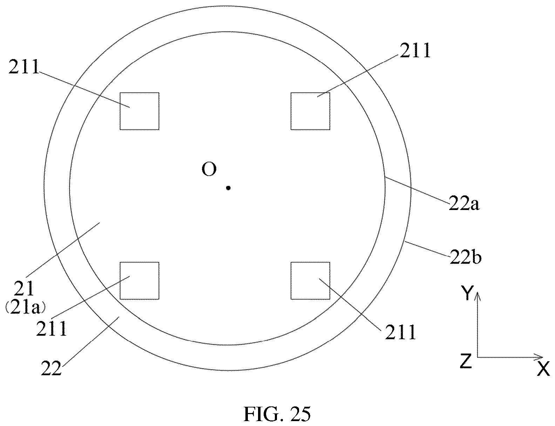

In an embodiment, a shape of an orthographic projection of the groove 211 on the first bottom wall 21 includes at least one of round shape, square shape, or stripe shape. In a specific embodiment, referring to FIG. 23, one surface of the first bottom wall 21 is provided with four grooves 211, and an orthographic projection of the groove 211 on the first bottom wall 21 is strip-shaped. In another specific embodiment, referring to FIG. 24, one surface of the first bottom wall 21 is provided with four grooves 211, and an orthographic projection of the groove 211 on the first bottom wall 21 is circular. In another specific embodiment, referring to FIG. 25, one surface of the first bottom wall 21 is provided with four grooves 211, and an orthographic projection of the groove 211 on the first bottom wall 21 is rectangular.

The positive electrode plate in this application typically includes a positive electrode current collector. The positive electrode current collector is not particularly limited in this application, provided that the objectives of this application can be achieved. For example, the positive electrode current collector may include but is not limited to aluminum foil, aluminum alloy foil, a composite current collector, or the like. In this application, the thickness of the positive electrode current collector is not particularly limited, provided that the objectives of this application can be achieved. For example, the thickness is 4 µm to 12 µm. In this application, the positive electrode active material layer may be disposed on one surface of the positive electrode current collector in a thickness direction thereof, or may be disposed on two surfaces of the positive electrode current collector in the thickness direction thereof. It should be noted that the "surface" herein may be an entire region of the positive electrode current collector or a partial region of the positive electrode current collector. This is not particularly limited in this application, provided that the objectives of this application can be achieved.

In this application, the positive electrode active material layer includes a positive electrode active material. This application does not particularly restrict the type of positive electrode active material, as long as the objectives of this application can be achieved. For example, the positive electrode active material may include at least one of lithium nickel cobalt manganese oxide (811, 622, 523, 111), lithium nickel cobalt aluminum oxide, lithium iron phosphate, lithium-rich manganese-based materials, lithium cobalt oxide, lithium manganese oxide, or lithium manganese iron phosphate. In this application, the positive electrode active material may further include a non-metal element, for example, the non-metal element includes at least one of fluorine, phosphorus, boron, chlorine, silicon, or sulfur. These elements can further improve stability of the positive electrode material.

In this application, the positive electrode active material layer may alternatively include a positive electrode binder. This application does not particularly restrict the positive electrode binder, as long as the objectives of this application can be achieved. For example, it may include but is not limited to at least one of fluororesin, polypropylene resin, fiber-type binder, rubber-type binder, or polyimide-type binder.

In this application, the positive electrode active material layer may also include a positive electrode conductive agent. This application does not particularly restrict the positive electrode conductive agent, as long as the objectives of this application can be achieved. For example, it may include but is not limited to at least one of conductive carbon black (Super P), carbon nanotubes (CNTs), carbon fibers, acetylene black, flake graphite, Ketjen black, graphene, metal materials, or conductive polymers. Preferably, the positive electrode conductive agent includes conductive carbon black and carbon nanotubes. The carbon nanotubes may include but are not limited to single-walled carbon nanotubes or multi-walled carbon nanotubes. The carbon fibers may include but are not limited to vapor grown carbon fibers (VGCF) and/or carbon nanofibers. The metal material may include but is not limited to metal powder and/or metal fiber, and specifically, the metal may include but is not limited to at least one of copper, nickel, aluminum, or silver. The conductive polymer may include but is not limited to at least one of a polyphenylene derivative, polyaniline, polythiophene, polyacetylene, or polypyrrole.

This application does not particularly restrict the content of the positive electrode active material, positive electrode binder, and positive electrode conductive agent, and a conventional content in the field can be used as long as the objectives of this application can be achieved. For example, based on the mass of the positive electrode material layer, the mass percentage of the positive electrode active material is 90% to 98%, the mass percentage of the positive electrode binder is 0.5% to 5%, and the mass percentage of the positive electrode conductive agent is 0.5% to 5%.

Optionally, the positive electrode plate may further include a conductive layer, and the conductive layer is sandwiched between the positive electrode current collector and the positive electrode active material layer. Composition of the conductive layer is not particularly limited in this application, and the conductive layer may be a conductive layer commonly used in the art. For example, the conductive layer may include but is not limited to the foregoing positive electrode conductive agent and the foregoing positive electrode binder.

In this application, the negative electrode plate usually includes a negative electrode current collector. This application does not particularly restrict the negative electrode current collector, as long as the objectives of this application can be achieved. For example, it may include but is not limited to copper foil, copper alloy foil, nickel foil, stainless steel foil, titanium foil, foam nickel, foam copper, or composite current collectors. In this application, thickness of the negative electrode current collector is not particularly limited, provided that the objectives of this application can be achieved. For example, the thickness of the negative electrode current collector is 3 µm to 12 µm. In this application, the negative electrode active material layer may be provided on one surface of the negative electrode current collector in a thickness direction thereof or two surfaces of the negative electrode current collector in the thickness direction thereof. It should be noted that the "surface" herein may be an entire region of the negative electrode current collector, or may be a partial region of the negative electrode current collector. This is not particularly limited in this application, provided that the objectives of this application can be achieved.

In this application, the negative electrode active material layer includes a negative electrode active material. The negative electrode active material is not particularly restricted, as long as the objectives of this application can be achieved. For example, the negative electrode active material includes a carbon material that can reversibly intercalate/deintercalate lithium ions. The carbon material can be a known carbon material used as a negative electrode active material in the art. For example, the carbon material may include but is not limited to crystalline carbon and/or amorphous carbon. The crystalline carbon may include but is not limited to amorphous, plate-shaped, flake-shaped, spherical or fiber-shaped natural graphite, or artificial graphite. The amorphous carbon may include but is not limited to at least one of soft carbon, hard carbon, mesophase pitch carbon, or calcined coke. For example, the negative electrode active material may include but is not limited to at least one of natural graphite, artificial graphite, mesocarbon microbeads (MCMB), hard carbon, soft carbon, silicon, silicon oxide (SiOₓ, where x is 1 or 2), or silicon-carbon composite. The silicon-carbon composite has a silicon-to-carbon mass ratio of 1:10 to 10:1, with Dᵥ50 being 0.1 µm to 100 µm.

In this application, the negative electrode active material layer may further include a negative electrode conductive agent. This application does not particularly restrict the negative electrode conductive agent, as long as the objectives of this application can be achieved. For example, it may include but is not limited to at least one of carbon-based material, metal-based material, or conductive polymer. The carbon-based material is selected from at least one of natural graphite, artificial graphite, conductive carbon black, acetylene black, Ketjen black, or carbon fibers. The metal-based material may include but is not limited to metal powder and/or metal fiber, and specifically, the metal may include but is not limited to at least one of copper, nickel, aluminum, or silver. The conductive polymer may include but is not limited to at least one of a polyphenylene derivative, polyaniline, polythiophene, polyacetylene, or polypyrrole.

In this application, the negative electrode active material layer may further include a negative electrode binder. This application does not particularly restrict the negative electrode binder, as long as the objectives of this application can be achieved. For example, it may include but is not limited to at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, poly(1,1-difluoroethylene), polyethylene, polypropylene, polyacrylic acid, styrene-butadiene rubber, acrylate styrene-butadiene rubber, epoxy resin, or nylon.

Optionally, the negative electrode plate may further include a conductive layer and the conductive layer is sandwiched between the negative electrode current collector and the negative electrode active material layer. Composition of the conductive layer is not particularly limited in this application, and the conductive layer may be a conductive layer commonly used in the art. The conductive layer may include but is not limited to the foregoing conductive agent and the foregoing binder.

The separator is not particularly limited in this application, provided that the objectives of this application can be achieved. For example, the separator may include but is not limited to at least one of a polyethylene (PE), polypropylene (PP), and polytetrafluoroethylene-based polyolefin (PO) separator, a polyester film (for example, a polyethylene terephthalate (PET) film), a cellulose film, a polyimide film (PI), a polyamide film (PA), a spandex, an aramid film, a woven film, a non-woven film (non-woven fabric), a microporous film, a composite film, a separator paper, a laminated film, or a spinning film, and preferably polyethylene and polypropylene which have a good effect on preventing short circuits, and can improve stability of an electrochemical apparatus through a shutdown effect. The separator of this application may have a porous structure, and a pore size is not particularly limited, provided that the objectives of this application can be achieved. For example, the pore size may be 0.01 µm to 1 µm. In this application, the thickness of the separator is not particularly limited, provided that the objectives of this application can be achieved. For example, the thickness is 5 µm to 500 µm.

In this embodiment of this application, the electrolyte may include a lithium salt and a non-aqueous solvent. The lithium salt is not particularly limited in this embodiment of this application, provided that the objectives of this application can be achieved. For example, the lithium salt may include but is not limited to at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, LiBOB, or lithium difluoroborate. Preferably, the lithium salt includes LiPF₆.

The non-aqueous solvent is not particularly limited in the embodiments of this application, provided that the objectives of the embodiments of this application can be achieved. For example, the non-aqueous solvent may include but is not limited to at least one of carbonate compound, carboxylate compound, ether compound, or another organic solvent. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate may include but is not limited to at least one of ethylene carbonate (EC), propylene carbonate (PC), butylene carbonate (BC), or vinyl ethylene carbonate (VEC). The fluorocarbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include but is not limited to at least one of methyl formate, methyl acetate, ethyl acetate, n-propyl acetate, tert-butyl acetate, methyl propionate, ethyl propionate, propyl propionate, γ-butyrolactone, decanolide, valerolactone, mevalonolactone, or caprolactone. The ether compound may include but is not limited to at least one of dibutyl ether, tetraethylene glycol dimethyl ether, diglyme, 1,2-dimethoxyethane, 1,2-diethoxyethane, ethoxymethoxy ethane, 2-methyltetrahydrofuran, or tetrahydrofuran. The another organic solvent may include but is not limited to at least one of dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, or phosphate ester.

An embodiment of a second aspect of the embodiments of this application provides a method of preparing a button cell including:
preparing an electrode assembly 1;
preparing a first housing 2, where the first housing 2 includes a first bottom wall 21 and a first side wall 22 connected to the first bottom wall 21, the first bottom wall 21 is provided with a groove 211, a size of the first bottom wall 21 in a first direction Z is T µm, and a size of the groove 211 in the first direction Z is H µm, where 0.1T ≤ H ≤ 0.7T and the first direction Z is perpendicular to the first bottom wall 22;
preparing a second housing 3; and
assembling the electrode assembly 1 with the first housing 2 and assembling the first housing 2 with the second housing 3 to form an accommodating space 20, where the electrode assembly 1 is placed in the accommodating space 20.

The electrode assembly 1 can be prepared by referring to the foregoing composition and conventional manufacturing processes in the field. In the method of preparing the button cell, the groove 211 is provided on the first housing 2 before assembling the first housing 2 with the electrode assembly 1. The groove 211 can be used to position the electrode assembly 1 during assembly, thereby improving the manufacturing precision and yield rate. The groove 211 can also enable effective pressure relief for the button cell when internal pressure increases excessively, thereby improving safety performance.

An embodiment of a third aspect of the embodiments of this application provides an electronic apparatus including the button cell provided by the embodiment of the first aspect of the embodiments of this application.

The electronic apparatus provided by this embodiment of this application includes but is not limited to various portable devices.

Specifically, several examples and comparative examples are provided to further describe some embodiments of this application.

### Test method and device

### Hot box test

(1) 10 prepared batteries of each example and comparative example were fully charged, and then placed in a hot box.
(2) The temperature of the hot box was raised from room temperature to 170°C at a temperature rise speed of 5°C/min.
(3) The predetermined temperature was maintained for 30 minutes. If the groove of the battery was burst open first, the battery passed the test. If the housing of the battery exploded and parts of the battery were ejected, the battery failed the test.

### Drop test

10 prepared battery samples of each example and comparative example were dropped from a height of 1.75 meters onto a smooth marble surface, and the drop was repeated for100 times for each battery. If the battery did not catch fire, explode, or leak the electrolyte, the battery passed the test. If the battery caught fire, exploded, or leaked the electrolyte, the battery failed the test.

### Welding test

100 prepared battery samples of each example and comparative example were taken to observe the welding status of the connection portion. If the weld did not fall off, the housing is not welded through, and there is no significant welding misalignment, the battery passed the test. If the weld fell off, the housing is welded through, or there was significant welding misalignment, the battery failed the test.

### Examples

### Example 1

### (1) Preparation of positive electrode plate

Lithium cobalt oxide, polyvinylidene fluoride, and conductive carbon black (SP) were thoroughly stirred and mixed in a weight ratio of 97:1.5:1.5 in N-methylpyrrolidone (NMP) to form a uniform positive electrode slurry. Then the positive electrode slurry was applied on two surfaces of a positive electrode current collector (aluminum foil that was 12 µm thick and 4.0 mm wide) to form a uniform coating. After drying and cold pressing, the single-side coating had a thickness of 50 µm. Then the conductive plate was welded on the positive electrode plate to obtain a positive electrode plate.

### (2) Preparation of negative electrode plate

Graphite material, styrene-butadiene rubber (SBR), and sodium carboxymethyl cellulose (CMC) were put in deionized water at a weight ratio of 97.4:1.2:1.4 and stirred and mixed thoroughly to form a uniform negative electrode slurry. The negative electrode slurry was applied to a negative electrode current collector (copper foil that was 10 µm thick and 4.5 mm wide) that had been coated with a primer layer. After drying and cold pressing, the single-side coating had a thickness of 60 µm. Thus, a negative electrode plate was obtained. The primer layer was formed by mixing SP, CMC, and SBR at a mass ratio of 60:5:35 and then applying the obtained slurry to two surfaces of the current collector in the gravure coating method. Then a conductive plate was welded onto the negative electrode plate to obtain a negative electrode plate.

### (3) Preparation of separator

A single-layer polyethylene (PE) film was selected as a substrate layer for a separator. The separator had a thickness of 16 µm, and the separator had a width of 6.1 mm. A width difference between the separator and the negative electrode plate was 1.6 mm.

### (4) Preparation of button cell

The positive electrode plate, the separator, and the negative electrode plate prepared above were stacked, so that the separator was sandwiched between the positive electrode plate and the negative electrode plate for separation. The stack was wound to obtain an electrode assembly. The electrode assembly was placed into the first housing, the second housing was fitted onto the top of the first housing, and moisture removal was performed at 80°C. The prepared electrolyte (composition of the electrolyte: ethylene carbonate (EC): propylene carbonate (PC): diethyl carbonate (DEC) = 1:1:1, and the concentration of LiPF₆ was 1.15mol/L) was injected. After packaging, standing, formation, and other processes were performed, a button cell. was obtained. The groove was located on the inner surface of the first bottom wall of the first housing; the dimensions of the first bottom wall were: T = 150 µm and R = 5 mm; and the dimensions of the groove were: H₁ = 45 µm, L = 2 mm, and W = 0.2 mm. The size of the groove can be adjusted by using an external pressure device. Since the groove was disposed on the inner surface of the first bottom wall of the first housing, in this embodiment, H₁ = H, and H₂ = 0.

### Example 2 to Example 7

The same as Example 1 except that the dimensions of the first bottom wall and the groove were adjusted according to Table 1 during the manufacture of the button cell.

### Example 8

The same as Example 1 except that two surfaces (the inner surface and the outer surface) of the first bottom wall of the first housing both had a groove during the manufacture of the button cell. The dimensions of the first bottom wall were T = 150 µm and R = 5 mm; the dimensions of the groove on the inner surface were H₁ = 15 µm, L = 2 mm, and W = 0.2 mm; and the dimensions of the groove on the outer surface were H₂ = 15 µm, L = 2 mm, and W = 0.2 mm.

### Example 9 to Example 28

The same as Example 8 except that the dimensions of the first bottom wall, the groove on the inner surface, and the groove on the outer surface were adjusted according to Table 2 during the manufacture of the button cell.

### Comparative Example 1 and Comparative Example 2

The same as Example 1 except that the dimensions of the first bottom wall and the groove were adjusted according to Table 1.

**Table 1**

| | T (µm) | H₁ (µm) | X(H₁=X×T) | H₂ (µm) | Y(H₁+ H₂=YT) | W (mm) | R (mm) | L (mm) | Number of passes in hot box test | Number of passes in drop test | Number of passes in welding test |
|---|---|---|---|---|---|---|---|---|---|---|---|
| Example 1 | 150 | 15 | 0.1 | 0 | 0.1 | 0.2 | 5 | 2 | 7/10 | 10/10 | 95/100 |
| Example 2 | 150 | 30 | 0.2 | 0 | 0.2 | 0.2 | 5 | 2 | 8/10 | 10/10 | 98/100 |
| Example 3 | 150 | 45 | 0.3 | 0 | 0.3 | 0.2 | 5 | 2 | 9/10 | 10/10 | 100/100 |
| Example 4 | 150 | 60 | 0.4 | 0 | 0.4 | 0.2 | 5 | 2 | 10/10 | 10/10 | 98/100 |
| Example 5 | 150 | 75 | 0.5 | 0 | 0.5 | 0.2 | 5 | 2 | 10/10 | 10/10 | 99/100 |
| Example 6 | 150 | 90 | 0.6 | 0 | 0.6 | 0.2 | 5 | 2 | 10/10 | 10/10 | 100/100 |
| Example 7 | 150 | 105 | 0.7 | 0 | 0.7 | 0.2 | 5 | 2 | 10/10 | 8/10 | 99/100 |
| Comparative Example 1 | 150 | 7.5 | 0.05 | 0 | 0.05 | 0.2 | 5 | 2 | 2/10 | 10/10 | 90/100 |
| Comparative Example 2 | 150 | 120 | 0.8 | 0 | 0.8 | 0.2 | 5 | 2 | 10/10 | 2/10 | 100/100 |

**Table 2**

| | T (µm) | H₁ (µm) | X(H₁=X×T) | H₂ (µm) | Y(H₁+ H₂=YT) | W (mm) | R (mm) | L (mm) | Number of passes in hot box test | Number of passes in drop test | Number of passes for welding yield rate test |
|---|---|---|---|---|---|---|---|---|---|---|---|
| Example 8 | 150 | 15 | 0.1 | 15 | 0.2 | 0.2 | 5 | 2 | 9/10 | 10/10 | 95/100 |
| Example 9 | 150 | 30 | 0.2 | 30 | 0.4 | 0.2 | 5 | 2 | 10/10 | 10/10 | 100/100 |
| Example 10 | 150 | 45 | 0.3 | 45 | 0.6 | 0.2 | 5 | 2 | 10/10 | 10/10 | 100/100 |
| Example 11 | 150 | 60 | 0.4 | 60 | 0.8 | 0.2 | 5 | 2 | 10/10 | 8/10 | 100/100 |
| Example 12 | 150 | 10 | 0.1 | 20 | 0.2 | 0.2 | 5 | 2 | 8/10 | 10/10 | 85/100 |
| Example 13 | 150 | 40 | 0.3 | 20 | 0.4 | 0.2 | 5 | 2 | 10/10 | 10/10 | 90/100 |
| Example 14 | 150 | 70 | 0.5 | 20 | 0.6 | 0.2 | 5 | 2 | 10/10 | 10/10 | 100/100 |
| Example 15 | 150 | 70 | 0.5 | 50 | 0.8 | 0.2 | 5 | 2 | 10/10 | 10/10 | 99/100 |
| Example 16 | 150 | 100 | 0.7 | 50 | 1 | 0.2 | 5 | 2 | 10/10 | 10/10 | 100/100 |
| Example 17 | 150 | 100 | 0.7 | 70 | 1.2 | 0.2 | 5 | 2 | 10/10 | 9/10 | 99/100 |
| Example 18 | 150 | 60 | 0.4 | 20 | 0.5 | 0.1 | 5 | 1 | 10/10 | 10/10 | 100/100 |
| Example 19 | 150 | 60 | 0.4 | 20 | 0.5 | 0.2 | 5 | 3 | 10/10 | 10/10 | 100/100 |
| Example 20 | 150 | 60 | 0.4 | 20 | 0.5 | 0.4 | 5 | 5 | 10/10 | 10/10 | 100/100 |
| Example 21 | 150 | 60 | 0.4 | 20 | 0.5 | 0.6 | 5 | 7 | 10/10 | 10/10 | 95/100 |
| Example 22 | 150 | 60 | 0.4 | 20 | 0.5 | 1 | 5 | 10 | 10/10 | 7/10 | 80/100 |
| Example 23 | 50 | 25 | 0.5 | 20 | 0.0 | 0.2 | 5 | 2 | 10/10 | 5/10 | 70/100 |
| Example 24 | 100 | 50 | 0.5 | 20 | 0.0 | 0.2 | 5 | 2 | 10/10 | 10/10 | 99/100 |
| Example 25 | 150 | 75 | 0.5 | 20 | 0.0 | 0.2 | 5 | 2 | 10/10 | 10/10 | 98/100 |
| Example 26 | 200 | 100 | 0.5 | 20 | 0.0 | 0.2 | 5 | 2 | 10/10 | 10/10 | 98/100 |
| Example 27 | 250 | 125 | 0.5 | 20 | 0.0 | 0.2 | 5 | 2 | 10/10 | 8/10 | 99/100 |
| Example 28 | 300 | 150 | 0.5 | 20 | 0.0 | 0.2 | 5 | 2 | 10/10 | 7/10 | 100/100 |

In Table 1, it can be seen from Example 1 to Example 7, Comparative Example 1, and Comparative Example 2 that if the size of the groove in the first direction is too small (as in Comparative Example 1), it is difficult to create a difference between the strength of the groove and the strength of other parts of the first housing. The battery is prone to overall explosion, posing a safety risk, and the groove is unclear and difficult to identify and position. If the size of the groove in the first direction is too large (as in Comparative Example 2), the battery is prone to electrolyte leakage after dropping, leading to failure of the battery. With the size T µm of the first bottom wall in the first direction and the size H µm of the groove in the first direction adjusted to meet 0.1T ≤ H ≤ 0.7T, the risk of thermal runaway in the button cell can be reduced, thereby improving the safety and product performance of the battery. Furthermore, it can be seen that when 0.3T ≤ H ≤ 0.6T is satisfied, the batteries all pass at least 2 out of the 3 tests, offering superior performance.

In Table 2, it can be seen from Example 8 to Example 11, and Example 1 to Example 4 that the inner surface (that is, first surface 21a) and the outer surface (that is, second surface 21b) of the first bottom wall both have a groove. This can make the recessed region of the groove larger, which is more conducive to pressure relief under extreme battery conditions, thereby further improving safety of the battery. In addition, the groove (that is, groove 211a) on the inner surface of the first bottom wall facilitates quick identification and fixing of a conductive plate when the conductive plate is welded. Using the groove to position the conductive plate is beneficial to improving the welding yield rate of the conductive plate. The groove (that is, fourth groove 211b) on the outer surface of the first bottom wall facilitates identification and grasping by a robot during the manufacturing of the electrode assembly, and is beneficial to the assembly and fitting of the first housing and the second housing, thereby improving the assembly precision of the electrode assembly.

It can be seen from Example 12 to Example 17 that with H₁ + H₂ adjusted to fall within the range of this application, the inner surface and outer surface of the first bottom wall both have a groove, which is more conducive to pressure relief under extreme battery conditions and further improves safety of the battery. In addition, the groove on the inner surface of the first bottom wall facilitates quick identification and fixing of the conductive plate when the conductive plate is welded. Using the groove to position the conductive plate is beneficial to improving the welding yield rate of the conductive plate. The groove on the outer surface of the first bottom wall facilitates identification and grasping by a robot during the manufacturing of the electrode assembly, and is beneficial to the assembly and fitting of the first housing and the second housing, thereby improving the assembly precision of the electrode assembly.

The size L mm of the groove along its extension direction, the size W mm of the groove in the direction perpendicular to its extension direction, and the radius R mm of the first bottom wall also generally have an influence on the performance of the battery. It can be seen from Example 18 to Example 22 that synergistically adjusting the relationship between L mm, W mm, and R mm to fall within the range of this application, the pressure relief effect on the battery is significantly improved, thereby further enhancing safety of the battery.

It can be seen from Examples 23 to 28 that the size T µm of the first bottom wall in the first direction (that is, the thickness of the first bottom wall) also has an influence on the performance of the battery. Adjusting the size T µm of the first bottom wall in the first direction to fall within the range of this application can reduce the risk of electrolyte leakage of the battery, and is also conducive to obtaining a battery with a high volumetric energy density and high weight energy density.

The foregoing descriptions are merely preferred embodiments of this application, but are not intended to limit this application. Any modification, equivalent replacement, or improvement made without departing from the principle of this application shall fall within the protection scope of this application.

## Claims

1. A button cell, comprising an electrode assembly, a first housing, and a second housing, wherein,
the first housing and the second housing are connected and mated to form an accommodating space, and the electrode assembly is disposed in the accommodating space;
the first housing comprises a first bottom wall and a first side wall connected to the first bottom wall, wherein the first bottom wall is provided with a groove; and
a size of the first bottom wall in a first direction is T µm, and a size of the groove in the first direction is H µm, wherein 0.1T ≤ H ≤ 0.7T; and
the first direction is a direction perpendicular to the first bottom wall.

2. The button cell according to claim 1, wherein, 0.3T ≤ H ≤ 0.6T.

3. The button cell according to claim 1, wherein, viewed from the first direction, the groove extends along a direction from an edge of the first bottom wall toward a center of the first bottom wall.

4. The button cell according to claim 1, wherein, viewed from the first direction, the groove extends from an edge of the first bottom wall toward a center of the first bottom wall.

5. The button cell according to claim 1, wherein, viewed from the first direction, the groove is separated from a center of the first bottom wall.

6. The button cell according to claim 1, wherein, the groove extends from the first bottom wall to the first side wall.

7. The button cell according to claim 1, wherein, the button cell further comprises an electrolyte, the second housing is provided with an electrolyte injection structure, and the first bottom wall is not provided with the electrolyte injection structure.

8. The button cell according to claim 1, wherein, in the first direction, two surfaces of the first bottom wall are both provided with the groove, and orthographic projections in the first direction of the grooves on the two surfaces of the first bottom wall at least partially overlap, wherein 0.1T ≤ H ≤ 0.3T.

9. The button cell according to claim 1, wherein, in the first direction, a size of the groove on one surface of the first bottom wall is H₁ µm, and a size of the groove on the other surface of the first bottom wall is H₂ µm, wherein 0.4T ≤ H₁ + H₂ ≤ 1.2T.

10. The button cell according to claim 1, wherein, the first bottom wall is circular, and in the first direction, at least one surface of the first bottom wall is provided with the groove.

11. The button cell according to claim 10, wherein, an orthographic projection of the groove on the first bottom wall is stripe-shaped; in an extension direction of the groove, a size of the groove is L mm; in a direction perpendicular to the extension direction of the groove, a size of the groove is W mm; and a radius of the first bottom wall is R mm, wherein 4T ≤ L ≤ 2R and 0.5T ≤ W ≤ 0.1πR.

12. The button cell according to claim 11, wherein, 4T ≤ L ≤ R.

13. The button cell according to claim 10, wherein, a surface of the first bottom wall is provided with three grooves, an orthographic projection of the groove on the first bottom wall is stripe-shaped, and the grooves extend along a diameter direction of the first bottom wall and an included angle between center lines of adjacent grooves in extension directions thereof is α, wherein 115° ≤ α ≤ 125°.

14. The button cell according to claim 10, wherein, a radius of the first bottom wall is R mm, wherein 3 ≤ R ≤ 10.

15. The button cell according to claim 1, wherein, one surface of the first bottom wall is provided with two grooves, and the two grooves are disposed intersecting with each other.

16. The button cell according to claim 1, wherein, the electrode assembly comprises a first electrode plate and a first conductive plate extending from the first electrode plate, the first conductive plate is connected to the first bottom wall and a connection portion is formed on the first bottom wall, and viewed from the first direction, the connection portion is separated from the groove.

17. The button cell according to claim 16, wherein, the electrode assembly further comprises a second electrode plate and a second conductive plate extending from the second electrode plate, the second conductive plate is connected to the second housing, and viewed from the first direction, the groove overlaps with the first conductive plate and/or the second conductive plate.

18. The button cell according to claim 1, wherein, 30 ≤ T ≤ 300.

19. The button cell according to claim 1, wherein, a shape of an orthographic projection of the groove on the first bottom wall comprises at least one of round shape, square shape, or stripe shape.

20. The button cell according to claim 1, wherein, the first housing and the second housing are integrally formed.

21. A method of preparing a button cell, comprising:
preparing an electrode assembly;
preparing a first housing, wherein the first housing comprises a first bottom wall and a first side wall connected to the first bottom wall, the first bottom wall is provided with a groove, a size of the first bottom wall in a first direction is T µm, and a size of the groove in the first direction is H µm, wherein 0.1T ≤ H ≤ 0.7T and the first direction is perpendicular to the first bottom wall;
preparing a second housing; and
assembling the electrode assembly with the first housing and assembling the first housing with the second housing to form an accommodating space, wherein the electrode assembly is disposed in the accommodating space.

22. An electronic apparatus, wherein, the electronic apparatus comprises the button cell according to any one of claims 1 to 20.
